# EUROPÄISCHE PATENTSCHRIFT

(11) **EP 3 014 132 B1**
(45) Veröffentlichungstag und Bekanntmachung des Hinweises auf die Patenterteilung: **01.08.2018**
(21) Anmeldenummer: 14725196.1
(22) Anmeldetag: 21.05.2014
(51) Int. Cl.: F16B 5/06, F16B 21/12, B60R 13/02

(54) **BAUTEILVERBINDUNG**
COMPONENT CONNECTION
ASSEMBLAGE DE COMPOSANTS

(30) Priorität: 25.06.2013 DE 102013211993
(43) Veröffentlichungstag der Anmeldung: 04.05.2016
(73) Patentinhaber: Bayerische Motoren Werke Aktiengesellschaft, 80809 München (DE)
(72) Erfinder: LAUDAN, Alexander, 79736 Rickenbach (DE); ERNST, Mario, 84144 Geisenhausen (DE); NIEKERK, Johann, 80993 München (DE)
(86) Internationale Anmeldenummer: PCT/EP2014/060428
(87) Internationale Veröffentlichungsnummer: WO 2014/206653

(56) Entgegenhaltungen:
- WO-A1-2005/100802
- DE-A1- 2 834 432
- DE-A1-102010 015 179
- DE-B3-102012 206 938
- US-A- 4 929 117

## Beschreibung

Die vorliegende Erfindung betrifft eine Bauteilverbindung gemäß dem Oberbegriff des Patentanspruchs 1.

Eine derartige Bauteilverbindung ist aus der US 4 929 117 A bekannt. Zum technischen Hintergrund der Erfindung zählen die WO 2005/100802 A1 sowie die DE 2834432 A1.

Aus der DE 10 2012 206 938 B3 ist eine Bauteilverbindung bekannt, bei der auf ein erstes Bauteil ein durch zwei miteinander verbundene Kugeln gebildetes männliches Fixierelement geschweißt ist, welches durch ein in einem zweiten Bauteil vorgesehenes Durchgangsloch ragt.

Auf das männliche Fixierelement ist ein Clipelement aufgeclipst, welches das Durchgangsloch übergreift und somit die beiden Bauteile zusammenklemmt. Bei einer derartigen Bauteilverbindung muss das Clipelement mit einer Mindestkraft auf das durch zwei oder mehr Kugeln gebildete männliche Fixierelement aufgeclipst werden. Zum Abziehen des Clipelements von dem männlichen Fixierelement ist - in Abhängigkeit von der genauen Konstruktion des Clipelements - eine u. U. sehr hohe Kraft erforderlich.

Aufgabe der Erfindung ist es, eine formschlüssige, lösbare Bauteilverbindung zu schaffen, die mit geringen Montagekräften herstellbar und mit geringen Demontagekräften demontierbar ist und die im montierten Zustand eine hohe Festigkeit aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine formschlüssige, lösbare Bauteilverbindung mit einem ersten Bauteil, von dem ein männliches Fixierelement absteht. Das männliche Fixierelement weist mindestens zwei koaxial zueinander angeordnete, miteinander verbundene Kugeln auf.

Das erste Bauteil und das männliche Fixierelement können aus ein und demselben Material oder aus unterschiedlichen Materialien hergestellt sein. Beispielsweise kann das erste Bauteil ein Metallblechbauteil, ein Kunststoffbauteil, ein Holzbauteil o. ä. sein. Das männliche Fixierelement kann z. B. aus Stahl, Aluminium, Kunststoff, Holz o. ä. bestehen.

Die lösbare Bauteilverbindung weist ferner ein Sperrelement und ein zweites Bauteil auf, das so angeordnet ist, dass das männliche Fixierelement in eine Ausnehmung des zweiten Bauteils ragt.

Der Kern der Erfindung besteht darin, dass das zweite Bauteil mindestens ein Durchgangsloch aufweist, durch das oder in das sich das Sperrelement erstreckt. Im montierten Zustand liegt das Sperrelement von außen her an dem männlichen Fixierelement an und zwar derart, dass es formschlüssig zwischen die Kugeln eingreift und sich dadurch einem Abziehen des zweiten Bauteils von dem männlichen Fixierelement widersetzt. Das Sperrelement hat somit eine ähnliche Funktion wie ein "Splint".

Zum Herstellen einer derartigen Bauteilverbindung kann das zweite Bauteil nahezu kraftlos auf das männliche Fixierelement aufgesetzt werden. Anschließend wird ebenfalls nahezu kraftlos oder mit einer nur geringen Fügekraft das mindestens eine Sperrelement appliziert, d.h. so in das Durchgangsloch eingebracht. Im montierten Zustand hält eine derartige Bauteilverbindung aufgrund des Formschlusses auch sehr hohen Abziehkräften stand.

Das mindestens zwei Kugeln aufweisende männliche Fixierelement ist vorzugsweise so konzipiert, dass die mindestens zwei Kugeln unmittelbar miteinander verbunden sind. Sie können z. B. einstückig miteinander verbunden sein oder verschweißt, verschraubt, verklebt oder in anderer Weise miteinander verbunden sein.

Das männliche Fixierelement kann mit dem ersten Bauteil stoffschlüssig verbunden sein. Beispielsweise kann es mit dem ersten Bauteil verschweißt sein. Alternativ oder ergänzend dazu kann es formschlüssig mit dem ersten Bauteil verbunden sein, z. B. durch Schrauben, Nieten, Clinchen etc. Alternativ dazu kann das männliche Fixierelement einstückig mit dem ersten Bauteil verbunden sein. Im Falle eines Kunststoffbauteils kann es beispielsweise in einem Arbeitsgang zusammen mit dem ersten Bauteil gespritzt sein. Alternativ dazu kann das männliche Fixierelement zumindest teilweise in das erste Bauteil eingespritzt oder einlaminiert sein. Das zweite Bauteil weist einen gehäuseartigen Rahmen auf, wobei in einer ersten Wandung des Rahmens das Durchgangsloch vorgesehen ist, durch das das Sperrelement hindurchgeschoben ist bzw. in das das Sperrelement eingeschoben ist. Weiterhin ist vorgesehen, dass in zwei einander gegenüberliegenden Wandungen des Rahmens jeweils ein Durchgangsloch vorgesehen ist, durch die oder in die sich das Sperrelement erstreckt. Das Sperrelement kann einen Sperrarm aufweisen. Alternativ dazu könnte das Sperrelement auch zwei oder mehrere Sperrarme aufweisen. Im Falle eines zweiarmigen Sperrelements kann vorgesehen sein, dass die beiden Sperrarme auf einander gegenüberliegenden Seiten des Fixierelements von außen her an dem Fixierelement anliegen und zwischen die Kugeln des Fixierelements formschlüssig eingreifen.

Das Sperrelement bzw. der Arm oder die Arme des Sperrelements können biegeelastisch gestaltet sein. Das Sperrelement kann insbesondere als "klammerartiges Element" ausgebildet sein. Es kann beispielsweise aus einem Runddraht oder aus Kunststoff oder aus einem anderen Material hergestellt sein. Alternativ dazu könnte das Sperrelement auch aus Blech in der Form eines Biegestanzteils hergestellt werden.

Ferner kann vorgesehen sein, dass das Sperrelement einen aus dem Rahmen herausragenden Abschnitt aufweist, der den Rahmen zumindest teilweise umklammert. Dadurch ist sichergestellt, dass das Sperrelement verliersicher bzw. relativ verliersicher kraftschlüssig und/oder formschlüssig an dem zweiten Bauteil fixiert ist.

Eine derartige Bauteilverbindung kann in den unterschiedlichsten Technikbereichen eingesetzt werden, z. B. im Fahrzeugbau, in der Möbelindustrie, im Bereich "weiße Ware" etc. Dementsprechend kann es sich bei dem ersten Bauteil beispielsweise um ein Fahrzeugbauteil, z. B. um ein Fahrzeugkarosseriebauteil, handeln, an dem mittels des zweiten Bauteils beispielsweise ein Kabelbaum oder eine andere Komponente fixiert sein kann.

Im Folgenden wird die Erfindung im Zusammenhang mit der Zeichnung näher erläutert. Es zeigen:
- Fig. 1: einen Längsschnitt durch eine Bauteilverbindung gemäß der Erfindung;
- Fig. 2: eine perspektivische Darstellung der in Fig.1 dargestellten Bauteilverbindung.

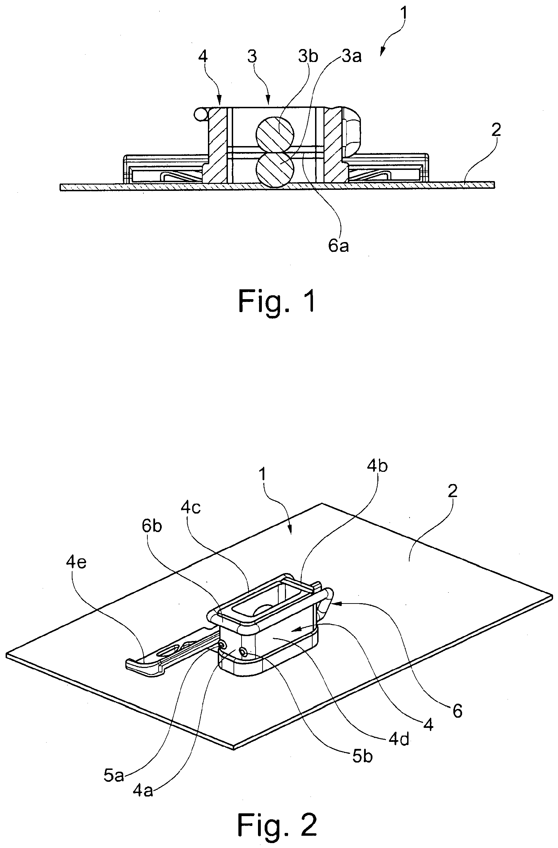

Die Fig. 1, 2 zeigen eine formschlüssige, lösbare Bauteilverbindung 1 mit einem ersten Bauteil 2, von dem ein männliches Fixierelement 3 absteht. Das männliche Fixierelement 3 ist hier durch zwei fest miteinander verbundene Kugeln 3a, 3b gebildet. Das männliche Fixierelement 3 kann z. B. über die (untere) Kugel 3a mit dem ersten Bauteil 2 verschweißt sein.

Auf das erste Bauteil 2 ist ein zweites, rahmenartiges Bauteil 4 aufgesetzt. Das rahmenartige Bauteil 4 ähnelt in einer Draufsicht einem Rechteck. Es ist also länglich gestaltet. Es weist zwei einander gegenüberliegende Breitseiten 4a, 4b sowie zwei einander gegenüberliegende Längsseiten 4c, 4d auf, die länger sind als die Breitseiten 4a, 4b.

Aufgrund der länglichen Form des rahmenartigen Bauteils 4 kann es in Längsrichtung relativ zu dem männlichen Fixierelement verschoben werden und bietet daher die Funktion eines "Verschiebelagers".

Alternativ dazu könnte das rahmenartige Bauteil z.B. quadratisch oder kreisrund ausgebildet sein. Auf diese Weise könnte ein "Festlager" dargestellt" werden.

In den beiden Breitseiten 4a, 4b sind jeweils zwei Durchgangslöcher 5a, 5b vorgesehen, wobei in der in Figur gezeigten perspektivischen Darstellung nur die in der vorderen Breitseite vorgesehenen Durchgangslöcher 5a, 5b erkennbar sind.

Das männliche Fixierelement 3 ragt in das zweite Bauteil 4 hinein. Durch die in den Breitseiten 4a, 4b vorgesehenen Durchgangslöcher ragen zwei Sperrarme eines klammerartigen Sperrelements 6, das bei dem hier gezeigten Ausführungsbeispiel aus einem Runddraht gebogen ist.

Von den beiden Sperrarmen ist in Fig.1 lediglich ein Sperrarm 6a zu sehen. Die beiden Sperrarme liegen von außen her an dem männlichen Fixierelement 3 an und zwar derart, dass sie formschlüssig zwischen die beiden Kugeln 3a, 3b eingreifen. Durch diesen Formschluss wird erreicht, dass sich die Sperrarme einem Abziehen des zweiten Bauteils 4 von dem ersten Bauteil 2 bzw. von dem damit verbundenen männlichen Fixierelement 3 widersetzen.

Wie aus den Fig. 1 und 2 ersichtlich ist, weist das Sperrelement 6 einen aus dem Rahmen bzw. aus dem zweiten Bauteil 4 herausragenden, das zweite Bauteil 4 klammerartig umschließenden Abschnitt 6b auf. Der Abschnitt 6b umklammert das zweite Bauteil 4 und fungiert als Verliersicherung. Über den zweiten Abschnitt 6b ist das Sperrelement 6 somit an dem zweiten Bauteil festgeklammert.

Vollständigkeitshalber sei noch ein von dem zweiten Bauteil 4 abstehendes Halteelement 4e erwähnt, an dem ein weiteres Bauteil fixiert werden kann.

Für die in den Fig. 1 und 2 gezeigte Bauteilverbindung gibt es eine nahezu unendliche Vielzahl von Anwendungsmöglichkeiten. Sofern es sich bei dem ersten Bauteil beispielsweise um ein Karosserieblech einer Fahrzeugkarosserie handelt, könnte daran über das zweite Bauteil 4 bzw. das damit verbundene Haltelement 4e ein Kabelbaum oder eine andere Komponente lösbar befestigt werden.

Wie aus den Fig. 1 und 2 ersichtlich ist, kann die Bauteilverbindung mit äußerst geringen Montagekräften hergestellt bzw. mit äußerst geringen Demontagekräften gelöst werden. Bei appliziertem Sperrelement 6 können mit einer derartigen Bauteilverbindung sehr hohe Halte- bzw. Abziehkräfte erreicht werden.

## Patentansprüche

1. Formschlüssige, lösbare Bauteilverbindung (1), mit
- einem ersten Bauteil (2),
- einem männlichen Fixierelement (3)
o das mindestens zwei koaxial zueinander angeordnete, miteinander verbundene Kugeln (3a, 3b) aufweist, und
o das von dem ersten Bauteil (2) absteht,
- einem Sperrelement (6) und
- einem zweiten Bauteil (4), das so angeordnet ist, dass das männliche Fixierelement (3) in eine Ausnehmung des zweiten Bauteils (4) ragt, wobei
das zweite Bauteil (4) mindestens ein Durchgangsloch (5a, 5b) aufweist, durch das oder in das sich das Sperrelement (6) erstreckt, das von außen her an dem männlichen Fixierelement (3) anliegt und formschlüssig zwischen die Kugeln (3a, 3b) eingreift und sich dadurch einem Abziehen des zweiten Bauteils (4) von dem männlichen Fixierelement (3) widersetzt,
**dadurch gekennzeichnet, dass**
das zweite Bauteil (4) einen Rahmen aufweist, wobei in einer ersten Wandung (4b) des Rahmens das mindestens eine Durchgangsloch (5a, 5b) vorgesehen ist, durch das sich das Sperrelement (6) erstreckt und
in zwei einander gegenüberliegenden Wandungen (4a, 4b) des Rahmens jeweils ein Durchgangsloch (5a, 5b) vorgesehen ist, durch die oder in die sich das Sperrelement (6) erstreckt.

2. Bauteilverbindung nach Anspruch 1,
**dadurch gekennzeichnet, dass** die mindestens zwei Kugeln (3a, 3b) unmittelbar miteinander verbunden sind.

3. Bauteilverbindung nach einem der Ansprüche 1 oder 2,
**dadurch gekennzeichnet, dass** Sperrelement zwei Sperrarme (6a) aufweist, die auf einander gegenüberliegenden Seiten des Fixierelements (3) von außen her an dem Fixierelement (3) anliegen.

4. Bauteilverbindung nach einem der Ansprüche 1 bis 3,
**dadurch gekennzeichnet, dass** das Sperrelement (6) biegeelastisch ist.

5. Bauteilverbindung nach einem der Ansprüche 1 bis 4,
**dadurch gekennzeichnet, dass** das Sperrelement (6) ein klammerartiges Element ist.

6. Bauteilverbindung nach einem der Ansprüche 1 bis 5,
**dadurch gekennzeichnet, dass** das Sperrelement (6) einen aus dem zweiten Bauteil (4) herausragenden Abschnitt (6b) aufweist, der das zweite Bauteil (4) zumindest teilweise umklammert, wodurch das Sperrelement (6) verliersicher kraftschlüssig und/oder formschlüssig an dem zweiten Bauteil (4) fixiert ist.

7. Bauteilverbindung nach einem der Ansprüche 1 bis 6,
**dadurch gekennzeichnet, dass** der Rahmen länglich, rechteckig, quadratisch oder kreisrund ausgebildet ist.

8. Bauteilverbindung nach einem der Ansprüche 1 bis 7,
**dadurch gekennzeichnet, dass** die Durchgangslöcher (5a, 5b) in einander gegenüberliegenden Wandungen (4a, 4b) des Rahmens vorgesehen sind, wobei die Breitseiten (4a, 4b) kürzer als Längsseiten (4c, 4d) des Rahmens sind.

9. Bauteilverbindung nach einem der Ansprüche 1 bis 8,
**dadurch gekennzeichnet, dass** von einer Außenseite des zweiten Bauteils (4) ein Halteelement (4e) absteht, über das ein weiteres Bauteil oder eine zu fixierende Komponente mit dem Halteelement (4) verbindbar ist.

10. Bauteilverbindung nach einem der Ansprüche 1 bis 9,
**dadurch gekennzeichnet, dass** das männliche Fixierelement (3)
• stoffschlüssig mit dem ersten Bauteil (2) verbunden ist oder
• formschlüssig mit dem ersten Bauteil (2) verbunden ist, insbesondere durch Verschrauben oder Vernieten oder Clinchen, oder
• einstückig mit dem ersten Bauteil (2) verbunden ist oder
• zumindest teilweise in das erste Bauteil (2) eingespritzt ist.

11. Bauteilverbindung nach einem der Ansprüche 1 bis 10,
**dadurch gekennzeichnet, dass** das Sperrelement (6) aus einem Runddraht oder aus Blech in der Form eines Biegestanzteils hergestellt ist.

12. Bauteilverbindung nach einem der Ansprüche 1 bis 10,
**dadurch gekennzeichnet, dass** das Sperrelement (6) aus Kunststoff hergestellt ist, insbesondere dass es ein Spritzgussteil ist.

13. Bauteilverbindung nach einem der Ansprüche 1 bis 12,
**dadurch gekennzeichnet, dass** das zweite Bauteil (4) aus Kunststoff besteht.

14. Bauteilverbindung nach einem der Ansprüche 1 bis 13,
**dadurch gekennzeichnet, dass** das erste Bauteil (2) ein Fahrzeugbauteil, insbesondere ein Fahrzeugkarosseriebauteil, ist.

## Claims

1. A positively-fitting, releasable component connection (1), with
- a first component (2),
- a male fixing element (3)
∘ which has at least two spheres (3a, 3b) connected together and arranged coaxially with each other, and
∘ which projects from the first component (2),
- a blocking element (6) and
- a second component (4) which is arranged such that the male fixing element (3) protrudes into a cutout in the second component (4),
wherein
the second component (4) has at least one through-hole (5a, 5b) through which or into which the blocking element (6) extends, which bears from the outside against the male fixing element (3) and engages in a positive fit between the spheres (3a, 3b) and thereby opposes removal of the second component (4) from the male fixing element (3),
**characterised in that**
the second component (4) has a frame, with the at least one through-hole (5a, 5b) being provided in a first wall (4b) of the frame, through which through-hole the blocking element (6) extends, and
one through-hole (5a, 5b) in each case is provided in two opposing walls (4a, 4b) of the frame, through which or into which through-holes the blocking element (6) extends.

2. A component connection according to Claim 1,
**characterised in that** the at least two spheres (3a, 3b) are directly connected together.

3. A component connection according to one of Claims 1 or 2,
**characterised in that** the blocking element has two blocking arms (6a) which bear from the outside on the fixing element (3) on opposite sides of the fixing element (3).

4. A component connection according to one of Claims 1 to 3,
**characterised in that** the blocking element (6) is flexurally elastic.

5. A component connection according to one of Claims 1 to 4,
**characterised in that** the blocking element (6) is a bracket-like element.

6. A component connection according to one of Claims 1 to 5,
**characterised in that** the blocking element (6) has a portion (6b) which protrudes out of the second component (4) and which at least partially clasps the second component (4), as a result of which the blocking element (6) is fixed in a non-positive and/or in a positive fit in captive manner on the second component (4).

7. A component connection according to one of Claims 1 to 6,
**characterised in that** the frame is formed to be elongate, rectangular, square or circular.

8. A component connection according to one of Claims 1 to 7,
**characterised in that** the through-holes (5a, 5b) are provided in opposing walls (4a, 4b) of the frame, the broad sides (4a, 4b) being shorterthan long sides (4c, 4d) of the frame.

9. A component connection according to one of Claims 1 to 8,
**characterised in that** a holding element (4e) projects from an outer side of the second component (4), by means of which element a further component or a component part which is to be fixed can be connected to the holding element (4).

10. A component connection according to one of Claims 1 to 9,
**characterised in that** the male fixing element (3)
ð is connected by a material-formed bond to the first component (2) or
ð is connected in a positive fit to the first component (2), especially by screwing or riveting or clinching, or
ð is connected in one piece to the first component (2) or
ð is injection-moulded at least partially into the first component (2).

11. A component connection according to one of Claims 1 to 10, **characterised in that** the blocking element (6) is produced from a round wire or from sheet metal in the form of a stamped and bent part.

12. A component connection according to one of Claims 1 to 10, **characterised in that** the blocking element (6) is produced from plastics material, especially **in that** it is an injection-moulded part.

13. A component connection according to one of Claims 1 to 12, **characterised in that** the second component (4) comprises plastics material.

14. A component connection according to one of Claims 1 to 13, **characterised in that** the first component (2) is a vehicle component, especially a vehicle body component.

## Revendications

1. Assemblage par la forme amovible de pièces (1) comprenant :
- une première pièce (2),
- un élément de fixation mâle (3),
qui comporte au moins deux sphères coaxiales (3a, 3b) liées entre elles, et
qui dépassent de la première pièce (2),
- un élément de blocage (6), et
une seconde pièce (4) qui est positionnée de sorte que l'élément de fixation mâle (3) pénètre dans un évidement de celle-ci,
la seconde pièce (4) comprenant au moins un perçage traversant (5a, 5b) au travers duquel ou dans lequel s'étend l'élément de blocage (6), qui s'applique par l'extérieur sur l'élément de fixation mâle (3) et vient en prise par une liaison par la forme entre les sphères (3a, 3b), et s'oppose ainsi à une extraction de la seconde pièce (4) de l'élément de fixation mâle (3),
**caractérisé en ce que**
la seconde pièce (4) comporte un cadre, et dans une première paroi (4b) de ce cadre est positionné le perçage traversant (5a, 5b) au travers duquel s'étend l'élément de blocage (6), et
dans deux parois opposées l'une à l'autre (4a, 4b) du cadre est respectivement positionné un perçage traversant (5a, 5b) au travers duquel ou dans lequel s'étend l'élément de blocage (6).

2. Assemblage de pièces, conforme à la revendication 1,
**caractérisé en ce que**
les deux sphères (3a, 3b) sont liées directement l'une à l'autre.

3. Assemblage de pièces, conforme à l'une des revendications 1 et 2,
**caractérisé en ce que**,
l'élément de blocage comporte deux bras de blocage (6a) à qui s'appliquent par l'extérieur sur l'élément de fixation(3) sur des côtés opposés de cet élément de fixation (3).

4. Assemblage de pièces, conforme à l'une des revendications 1 à 3,
**caractérisé en ce que**
l'élément de blocage (6) est élastiquement flexible.

5. Assemblage de pièces, conforme à l'une des revendications 1 à 4,
**caractérisé en ce que**,
l'élément de blocage (6) est un élément similaire à une pince.

6. Assemblage de pièces, conforme à l'une des revendications 1 à 5,
**caractérisé en ce que**,
l'élément de blocage (6) comporte un segment (6b) dépassant de la seconde pièce (4), qui entoure au moins partiellement, en la pinçant la seconde pièce (4), de sorte que l'élément de blocage (6) soit fixé par une liaison par la forme et/ou par une liaison par la force à la seconde pièce (4) de façon imperdable.

7. Assemblage de pièces, conforme à l'une des revendications 1 à 6,
**caractérisé en ce que**
le cadre est longitudinal, rectangulaire, carré ou circulaire.

8. Assemblage de pièces, conforme à l'une des revendications 1 à 7,
**caractérisé en ce que**
les perçages traversant (5a, 5b) sont situés dans des parois opposées (4a, 4b) du cadre, définissant des petites faces (4a, 4b) plus courtes que les faces longitudinales (4c, 4d) du cadre.

9. Assemblage de pièces, conforme à l'une des revendications 1 à 8,
**caractérisé en ce que**
d'une face externe de la seconde pièce (4) dépasse un élément de retenue (4e) par l'intermédiaire duquel une autre pièce ou un autre composant à fixer peut être lié à l'élément de retenue (4).

10. Assemblage de pièces, conforme à l'une des revendications 1 à 9,
**caractérisé en ce que**
l'élément de fixation mâle (3) :
- est relié par une liaison par la matière à la première pièce (2), ou
- est relié par une liaison par la forme à la première pièce (2), en particulier par vissage, par rivetage ou par clinchage, ou
- est relié en une seule pièce à la première pièce (2), ou
- est au moins partiellement injecté dans la première pièce (2).

11. Assemblage de pièces, conforme à l'une des revendications 1 à 10,
**caractérisé en ce que**,
l'élément de blocage (6) est réalisé en un fil rond ou en tôle sous la forme d'une pièce estampée et cintrée.

12. Assemblage de pièces, conforme à l'une des revendications 1 à 10,
**caractérisé en ce que**,
l'élément de blocage (6) est réalisé en matériau synthétique, et est en particulier une pièce coulée par injection.

13. Assemblage de pièces, conforme à l'une des revendications 1 à 12,
**caractérisé en ce que**
la seconde pièce (4) est réalisée en matériau synthétique.

14. Assemblage de pièces, conforme à l'une des revendications 1 à 13,
**caractérisé en ce que**
la première pièce (12) est un composant de véhicule en particulier un composant de carrosserie de véhicule.
